# EUROPÄISCHE PATENTSCHRIFT

(11) **EP 2 532 553 B1**
(45) Veröffentlichungstag und Bekanntmachung des Hinweises auf die Patenterteilung: **07.08.2019**
(21) Anmeldenummer: 12004325.2
(22) Anmeldetag: 06.06.2012
(51) Int. Cl.: B60Q 7/00

(54) **Warndreieck für Kraftfahrzeuge**
Warning triangle for motor vehicles
Triangle de signalisation pour véhicules automobiles

(30) Priorität: 08.06.2011 CZ 201124445 U
(43) Veröffentlichungstag der Anmeldung: 12.12.2012
(73) Patentinhaber: LEINA-WERKE GmbH, 51570 Windeck (DE)
(72) Erfinder: Steinhauer, Thorsten, 57539 Bitezen (DE)
(74) Vertreter: Herden, Andreas F.

(56) Entgegenhaltungen:
- EP-A1- 1 136 317
- EP-A2- 0 864 464
- DE-U1- 20 001 925
- DE-U1- 20 201 661
- DE-U1-202006 017 425

## Beschreibung

### Anwendungsgebiet

Technische Lösung betrifft die Konstruktion des Warndreiecks für Kraftfahrzeuge, insbesondere die Aerodynamik der Grundleiste und die Unterbringung von Standfüssen des Warndreiecks für Kraftfahrzeuge.

### Bisheriger Stand der Technik

Bisher sind viele Lösungen von Warndreiecken für Kraftfahrzeuge bekannt, die sich voneinander vor allem durch die Konstruktion von reflektierende Flächen oder durch die Konstruktion des Basisteils des Warndreiecks mit dem Ständer, bzw. durch die Anordnung und das Zusammenfalten von Standfüssen unterscheiden.

Das Ziel aller Hersteller ist insbesondere die Kostenreduzierung für die Fertigung dieser Warndreiecke, die z. B. durch die Gewichtssenkung oder durch Änderungen der Konstruktion erreichbar sind, die zur Verkleinerung von Dreieckabmessungen in der zusammengefalteten Transportlage führen, insbesondere die Unterbringung von Dreieckstandfüssen u. ä.

Als Beispiel dafür dient z.B. die Lösung des Faltens von Standfüßen gemäß dem Patent EP Nr. 1 127 744, wo sich unter der unteren Basisseite des Warndreiecks eine flache Tragleiste befindet, an die die geformten Standfüße befestigt sind, die in eine Aussparung in dieser flachen Tragleiste eintauchen.

Das Dokument EP 0 864 464 A2 zeigt ein Warndreieck für Kraftfahrzeuge umfassend drei Arme, die eine grundlegende horizontale Leiste und eine rechte und eine linke Leiste, die mit den reflektierenden Flächen versehen sind, umfassen und vier Standfüße, wobei die grundlegende, horizontal positionierte Leiste am ihren Enden die Form eines umgedrehten Buchstabens "T" hat, und sie an ihren beiden Endstücken mit geformten Buchsen für die Unterbringung von drehbaren Kugelgelenken versehen ist, welche zum Einrasten von oberen Endstücken der Standfüße ausgebildet sind, wobei die geformten Buchsen als horizontal untergebrachte "U"-Profile ausgebildet sind, die mit ihrer inneren Form für eine drehbare Anordnung der drehbaren Kugelgelenken der Drahtstandfüße ausgebildet sind, wenn deren horizontale Längsachse parallel mit der horizontalen Längsachse der Basisleiste ist, wobei ein erster, oberer Arm des "U"-Profils einen Abschluss der Basisleiste bildet, und ein zweiter, unterer Arm des "U"-Profils sich unter einer horizontalen Fläche der Basisleiste in Form des umgedrehten Buchstabens "T" so befindet, dass er in einer Richtung nach innen geöffnet ist, und wobei die geformten Buchsen als zweiteilige voneinander durch eine Zwischenwand getrennte Buchsen in Form von einem horizontal platziertem Prisma geschaffen sind, wobei deren Innenmaß dem Durchmesser des drehbaren Kugelgelenks eines Standfußes entspricht, um die Rotationsbewegung des drehbaren Kugelgelenks ermöglichen.

Weitere bekannte Lösung gemäß CZ Patent Nr. 287527 schließt ein Warndreieck ein, bei dem der Basisteil zum verlängerten Plattenstand befestigt ist, in der Nähe dessen beider Endstücke ein Gelenkglied angeordnet ist, an den die Füße drehbar in Paaren so befestigt sind, dass das erste Paar von Füßen in der Nähe des ersten Endstückes des Plattenständers platziert ist und das zweite Paar von Füßen in der Nähe des zweiten Endstücks des Plattenständers platziert ist. Zum Zwecke der Aufhängung von Warndreieckfüßen so, dass sie einen möglichst kleinen Raum einnehmen, und um sicherzustellen, dass das Warndreieck für die Aufbewahrung im Fahrzeug auf kleinstmögliche Abmessungen zusammengefaltet werden kann, sind die Drehwellen des ersten Fuß-Paars in der Folge so angeordnet, dass sie in der Ebene liegen, die wenigstens im Wesentlichen in Bezug auf die Ebene, die vom Plattenständer gebildet wird, parallel ist, und dass die Drehwellen des zweiten Fuß-Paars in der Folge so angeordnet sind, dass sie in der Ebene liegen, die wenigstens im Wesentlichen in Bezug auf die Ebene, die vom Plattenständer gebildet wird, parallel ist. Die Füße sind drahtartig und an das Gelenkglied befestigt, das mit zwei biegsamen flexiblen Zweigen versehen ist.

Bei den meisten verwendeten Lösungen sind die Standfüße, falls ihre Konstruktionslösung in der Gelenkbefestigung besteht, an die Ständer oder an das Basisteil von Warndreiecken so befestigt, dass ihr Gelenk unter die horizontale Ebene der unteren Kante des Basisteils des Warndreiecks untergebracht ist, was meistens den Schwerpunkt des Warndreiecks erhöht und so deren Stabilität insbesondere bei der Durchfahrt anderer Kraftfahrzeuge an dem Warndreieck vorbei vermindert. Ein weiterer Nachteil der meisten bisherigen Lösungen ist eine komplizierte Konstruktion bzw. ein höheres Gesamtgewicht von Warndreiecken.

Ebenfalls ist die Lösung des Warndreiecks gemäß Gebrauchsmuster CZ Nr. 13606 bekannt, in dem jedes Paar von drahtartigen Standfüßen mittels Gelenkglied angebracht wird, das aus einem Flachteil besteht, das mit einer Öffnung zum Einführen des Verbindungsbolzens von Warndreieckarmen und einem senkrecht angebrachten H-Profil versehen ist, das drehbar in den Verbindungsbolzen für eine drehbare Verbindung des unteren horizontalen Warndreieckarms mit anderen Dreieckarmen so untergebracht ist, in dass die Rotationsbewegung des Gelenkglieds nach oben im Bereich von 120 seiner oberen Lage die Unterbringung des Drehgelenks von drahtartigen Standfüßen über die Ebene der oberen Kante des unteren horizontalen Warndreieckarms möglich macht, wodurch der Schwerpunkt des Dreiecks sinkt und macht in der unteren Lage somit das Einschieben und Befestigen von drahtartigen Standfüßen vom Warndreieck in die Transportlage unter der Ebene der unteren Kante des unteren horizontalen Warndreieckarms möglich, wobei die Zusammenstellung des Gelenkglieds und des unteren horizontalen Warndreieckarms ein federndes Element bildet, um die Neigung des gesamten Warndreiecks zu ermöglichen und dessen Rückkehr in die ursprüngliche Lage beim Luftaufprall, das durch ein anderes vorbeifahrendes Fahrzeug verursacht wird, zu gewährleisten.

Das Warndreieck gemäß dieser technischen Lösung hat dank dem Gelenkglied mit Drahtstandfüßen, das in der Arbeitsposition über der Ebene der oberen Kante des unteren Arms untergebracht ist, eine höhere Stabilität bei einem niedrigeren Schwerpunkt des Warndreiecks. Obwohl es sich um eine völlig genügende Lösung handelt, macht die Konstruktion des Warndreiecks gemäß dieser Lösung allerdings keine weitere Senkung vom Gewicht und Produktionskosten möglich.

### Das Wesen der technischen Lösung

Die meisten aufgeführten Nachteile der bisherigen Lösungen von Warndreiecken für Kraftfahrzeuge werden zu einem hohen Maß vom Warndreieck für Kraftfahrzeuge beseitigt, das aus drei Armen, aus den mit den reflektierenden Flächen versehenen Leisten und aus dem durch vier Drahtstandfüße gebildeten Ständer besteht, mit dem Vorteil von Drahtfüßen mit einem Kreisquerschnitt, gemäß dieser technischen Lösung, deren Wesen darin besteht, dass die horizontale Basisleiste des Warndreiecks über ihre gesamte Länge die Form des umgedrehten Buchstaben "T" hat, und dass sie auf beiden Endstücken mit geformten Buchsen zur Unterbringung des drehbaren Kugelgelenks beider oberen Endstücke der Drahtstandfüße des Warndreiecks und zum Einrasten von Drahtstandfüßen versehen ist, die auf ihrem oberen Endstück mit drehbaren Kugelgelenken für einen drehbaren Anschluss von Drahtstandfüßen an die geformten Buchsen versehen sind, die an horizontal positionierte "U"-Profile mit innerer Formgebung erinnern, deren horizontale Längsachse parallel mit der horizontalen Längsachse der Basisleiste in Form vom umgedrehten Buchstaben "T" verläuft, wo der erste obere "U"-Profil-Arm den geformten Abschluss der Basisleiste bildet und der zweite untere "U"-Profil-Arm sich unter der horizontalen Fläche der Basisleiste in Form vom umgedrehten Buchstaben "T" befindet, und in die Richtung nach innen geöffnet ist, wobei die innere Formgebung jeder von geformten Buchsen zum Unterbringen von drehbaren Kugelgelenken von Drahtstandfüßen und zum Einrasten dieser Drahtstandfüßen angepasst ist, und wenigstens im Eingangsteil weiterhin zum Unterbringen von unteren Endstücken der gegenüberliegenden Drahtstandfüße in der horizontalen Transportlage angepasst ist, wobei die Basisleiste des Warndreiecks in Form vom umgedrehten Buchstaben "T", an deren vertikalen Teil die untere reflektierende Fläche des Warndreiecks befestigt ist, wenn in den drehbaren Bolzen zum Anschließen der rechten und der linken Leiste des Warndreiecks zur Basisleiste der untere Teil des dreieckigen Lakens befestigt ist, dessen untere Kante parallel mit der Längsachse der Basisleiste verläuft und an den Flachteil dieser Basisleiste von oben dicht anliegt, wobei die Basisleiste in ihrem unteren Bereich weiterhin mit dem mittleren Anschlag zur Sicherstellung der Transportlage von Drahtstandfüßen versehen ist, wenn die Sicherstellung der Transportlage von Drahtstandfüßen weiterhin mittels eingesetztem Durchmesser von Drahtstandfüßen sichergestellt ist, der mit seinen Abmessungen der Breite des inneren Bereichs des "U"-Profils entspricht, insbesondere der Breite vom Eingangsteil, in den das untere Endstück der gegenüberliegenden Drahtfüße in der Transportlage eingelegt wird, wobei die auf beiden Endstücken der flachen Basisleiste des Warndreiecks geformten Buchsen, die als horizontale "U"-Profile zum Unterbringen von drehbaren Kugelgelenken von Standfüßen und zum Einrasten von Drahtstandfüßen ausgebildet sind, sind in der vorteilhaften Ausführung als zweiteilige Buchsen in Form vom horizontal angeordneten Prisma geschaffen, die mit einem Pfropfen verschlossen und voneinander durch eine Zwischenwand getrennt sind, wobei ihr Innenmaß dem Durchmesser des drehbaren Kugelgelenks des Drahtstandfußes mit einer Toleranz entspricht, die die Rotationsbewegung des drehbaren Kugelgelenks des Drahtstandfußes ermöglicht.

Die Konstruktion vom Warndreieck, insbesondere die aerodynamische Form der Basisleiste in Form vom umgedrehten Buchstaben "T" gemäß dieser technischen Lösung, ermöglicht die Gewichtssenkung des eigentlichen Warndreiecks gleichzeitig mit seinen Abmessungen in der zusammengefalteten Transportlage bei gleichzeitiger Erhöhung der Stabilität des Warndreiecks beim seinen Einsatz auf den Verkehrswegen. Durch die Reduzierung vom Gewicht und von Abmessungen kann ein niedrigerer Produktpreis zusammen mit der Reduzierung von Transportkosten und dadurch eine höhere Konkurrenzfähigkeit des Warndreiecks gemäß dieser technischen Lösung erreicht werden.

### Übersicht über die Abbildungen auf der Zeichnung

Technische Lösung wird näher mittels Zeichnungen erklärt, auf denen die Fig. 1. die Vorderansicht der Zusammenstellung des Warndreiecks, die Fig. 2 die axonometrischen Ansichten von oben und von unten der Basisleiste in Form vom Buchstaben "T", die Fig. 3 die Detailansicht des rechten Teils der Basisleiste vom Warndreieck, mit den ausgezogenen Drahtfüßen einschließlich des Pfropfens, die Fig. 4 die Detailansicht dieses rechten Teils der Basisleiste des Warndreiecks, mit den zusammengefalteten Drahtfüßen, einschließlich des Pfropfens, die Fig. 5 die Detailansicht des Schnitts durch den linken Teil der Basisleiste des Warndreiecks, mit den zusammengefalteten Drahtfüßen, einschließlich des Pfropfens, die Fig. 6 die Detailseitenansicht des linken Teils der Basisleiste des Warndreiecks, mit den zusammengefalteten Drahtfüßen, ohne Pfropfen, die Fig. 7 die axonometrische Unteransicht der linken geformten Buchse einschließlich des Pfropfens für die Unterbringung der Drehgelenke von Drahtstandfüßen des Warndreiecks, mit den zusammengefalteten Drahtfüßen, und dann Fig. 8 mit den ausgezogenen Drahtfüßen, und die Fig. 9 das Detail des Pfropfens der geformten Buchse darstellen.

### Beispiele der Ausführung

### Beispiel Nr. 1.

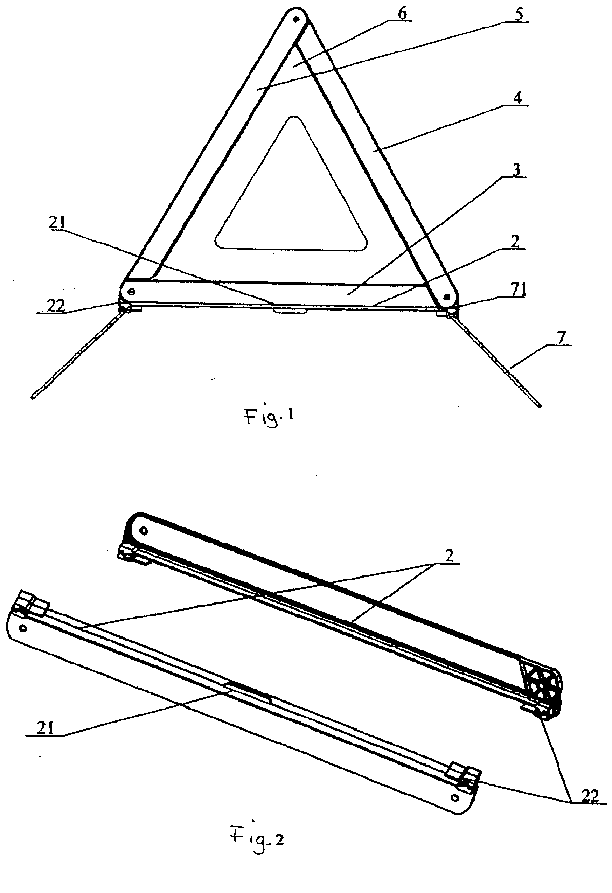

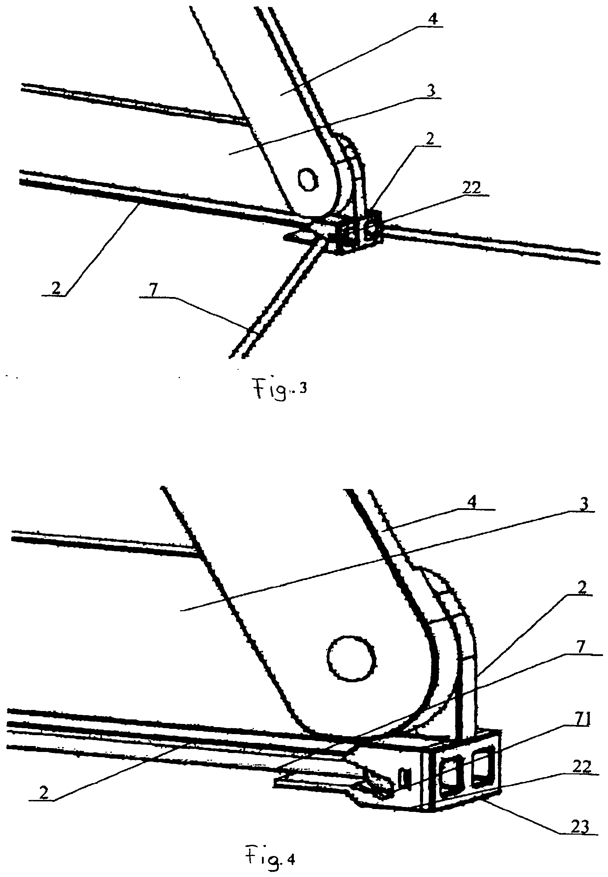

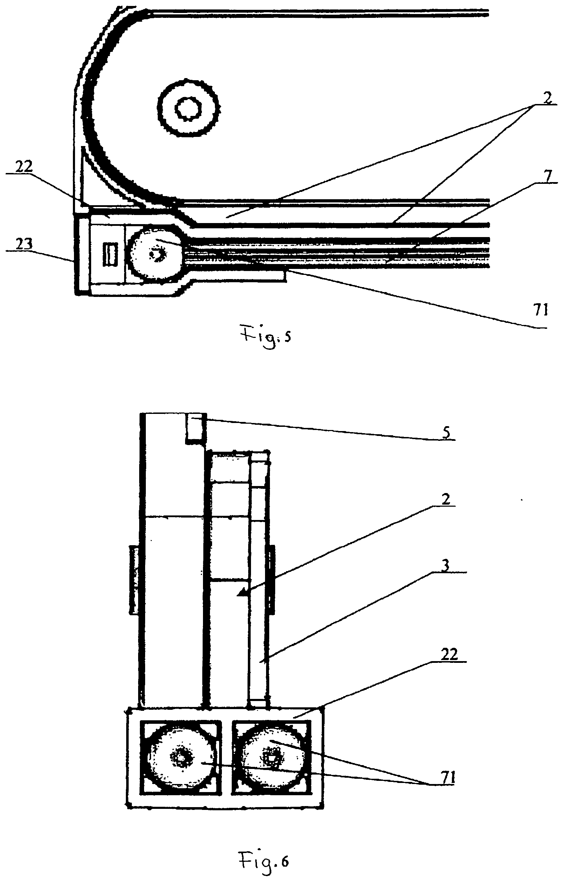

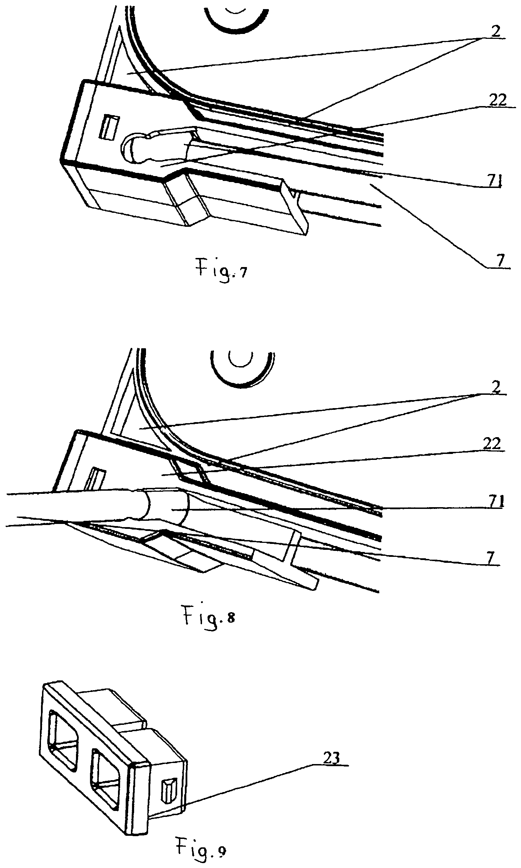

Das Warndreieck für Kraftfahrzeuge gemäß den Fig. 1 bis Fig. 9 besteht aus drei Armen, die auf der horizontalen Basisleiste 2 und auf der rechten und linken Leiste positioniert sind und mit den reflektierenden Flächen 3, 4 und 5 versehen sind, und aus vier Drahtstandfüßen 7 aus Draht mit Kreisdurchschnitt, die auf einem Endstück mit einem Kugelgelenk 71 versehen sind.

Die horizontale Basisleiste 2 des Warndreiecks hat eine spezielle Ausformung in Form vom umgedrehten Buchstaben "T", und ist auf beiden ihren Endstücken mit geformten Buchsen 22 für die Unterbringung von Drehgelenken 71 der Drahtstandfüße 7 und zum Einrasten der Drahtstandfüße 7 des Warndreiecks versehen. Die Drahtstandfüße 7 sind auf ihrem oberen Endstück mit einem drehbaren Kugelgelenk 71 für einen drehbaren Anschluss der Drahtstandfüße 7 an die geformten Buchsen 22 versehen. Die geformten Buchsen 22 erinnern mit ihrer Form von weitem an die horizontal untergebrachten "U"-Profile mit innerer Formgebung. Ihre horizontale Längsachse ist parallel mit der Längsachse der Basisleiste 2 in Form vom umgedrehten Buchstaben "T", und der erste obere Arm des "U"-Profils bildet dabei den geformten Abschluss dieser Basisleiste, und der zweite untere Arm des "U"-Profils befindet sich unter der horizontalen Fläche der Basisleiste 2 in Form vom umgedrehten Buchstaben "T" und ist in Richtung nach innen geöffnet. Die innere Formgebung jeder von den geformten Buchsen 22 ist zum Unterbringen von drehbaren Kugelgelenken 71 der Drahtstandfüße 7 und zum Einrasten dieser Drahtstandfüße 7 angepasst. Im Eingangsbereich ist gleichzeitig diese innere Formgebung zum Unterbringen von unteren Endstücken der gegenüberliegenden Drahtstandfüße 7 in der horizontalen Transportlage angepasst. An die Basisleiste 2 des Warndreiecks in Form vom Buchstaben "T" ist weiterhin in ihrem vertikalen Bereich die untere reflektierende Fläche 3 des Warndreiecks angebracht, und im Bereich von Drehbolzen zur drehbaren Unterbringung der linken und der rechten Leiste des Warndreiecks ist an diese Basisleiste 2 der untere Teil des dreieckigen Lakens 6 angebracht, deren untere Kante parallel mit der Längsachse der Basisleiste 2 ist und an den Flachteil dieser Basisleiste 2 von oben dicht anliegt, wodurch sie die Anpresskraft auf die Basisleiste 2 des Warndreiecks erhöht. Die Basisleiste 2 des Warndreiecks ist in ihrem unteren Bereich weiterhin mit einem mittigen Anschlag 21 zur Sicherstellung der Transportlage von Drahtstandfüßen 7 versehen. Die Sicherstellung der Transportlage der Drahtstandfüße 7 ist dabei weiterhin auch durch den eingesetzten Drahtdurchmesser der Drahtstandfüße 7 gewährleistet, der mit seiner Abmessung der Breite des inneren "U"-Profilbereichs entspricht, insbesondere der Breite des offenen Eingangsbereichs, in den das Endstück der gegenüberliegenden Drahtfüße 7 in der Transportlage eingelegt wird. Die geformten Buchsen 22, die an beiden Endstücken der flachen Basisleiste 2 des Warndreiecks als horizontale "U"-Profile zur Unterbringung von drehbaren Kugelgelenken 71 entsprechender Drahtstandfüße 7 und zum Einrasten dieser Drahtstandfüße 7 ausgebildet sind, sind als zweiteilige Buchsen in Form von einem horizontal untergebrachten Prisma geschaffen, die mit einem Pfropfen 23 verschlossen, und mit einer Zwischenwand getrennt sind, wobei ihr Innendurchmesser dem Durchmesser des drehbaren Kugelgelenks 71 des Drahtstandfußes 7 mit einer Toleranz entspricht, die die Rotationsbewegung des drehbaren Kugelgelenks 71 des Drahtstandfußes 7 möglich macht.

Die unteren Endstücke der Drahtstandfüße 7 können zur Verbesserung der Stabilität der Verankerung des Dreiecks auf der Fahrbahn mit einer Schräge versehen werden.

Beim Auseinanderfalten des Warndreiecks in die Arbeitsposition dreht sich jeder von den Standfüßen 7 in der Buchse 22 in Richtung nach außen und nach unten und rastet in der Einrastkerbe ein. In der entgegengesetzten Vorgehensweise wird das Warndreieck in die Transportlage zusammengefaltet, wobei die Drähte der Drahtfüße 7 auf den mittigen Anschlag 21 gestützt und deren Endstücke im Eingangsbereich der entgegengesetzten geformten Buchse 22 befestigt werden.

Das Warndreieck gemäß dieser technischen Lösung ist für alle pflichtgemäß mit diesem Zubehör ausgestatteten Kraftfahrzeugtypen einsetzbar.

## Patentansprüche

1. Warndreieck für Kraftfahrzeuge umfassend drei Arme, die eine grundlegende horizontale Leiste (2) und eine rechte und eine linke Leiste, die mit den reflektierenden Flächen (3, 4 und 5) versehen sind, umfassen,
und vier Standfüße (7),
wobei
die grundlegende, horizontal positionierte Leiste (2) über ihre gesamte Länge die Form eines umgedrehten Buchstabens "T" hat,
und dass sie an ihren beiden Endstücken mit geformten Buchsen (22) für die Unterbringung von drehbaren Kugelgelenken (71) versehen ist, welche zum Einrasten von oberen Endstücken der Standfüße (7) ausgebildet sind,
wobei die geformten Buchsen (22) als horizontal untergebrachte "U"-Profile ausgebildet sind, die mit ihrer inneren Form für eine drehbare Anordnung der drehbaren Kugelgelenken (71) der Drahtstandfüße (7) ausgebildet sind, wenn deren horizontale Längsachse parallel mit der horizontalen Längsachse der Basisleiste (2) ist,
wobei ein erster, oberer Arm des "U"-Profils einen Abschluss der Basisleiste (2) bildet, und ein zweiter, unterer Arm des "U"-Profils sich unter einer horizontalen Fläche der Basisleiste (2) in Form des umgedrehten Buchstabens "T" so befindet, dass er in einer Richtung nach innen geöffnet ist,
und wobei die geformten Buchsen (22) als zweiteilige voneinander durch eine Zwischenwand getrennte, mit einem Pfropfen (23) geschlossene Buchsen in Form von einem horizontal platziertem Prisma geschaffen sind, wobei deren Innenmaß dem Durchmesser des drehbaren Kugelgelenks (71) eines Standfußes (7) entspricht, um die Rotationsbewegung des drehbaren Kugelgelenks (71) zu ermöglichen.

2. Warndreieck nach Anspruch 1, **dadurch gekennzeichnet, dass** die Standfüße als Drahtstandfüße mit kreisförmigem Querschnitt ausgebildet sind.

3. Warndreieck nach Anspruch 1 oder 2,
**dadurch gekennzeichnet, dass** die innere Form jeder der geformten Buchsen (22) zur Unterbringung von drehbaren Kugelgelenken (71) der Standfüße (7) und zum Einrasten der Standfüße (7) angepasst ist, und dass diese innere Formgebung in einem offenen Eingangsbereich gleichzeitig zur Unterbringung der unteren Endstücke der gegenüberliegenden Standfüße (7) in einer horizontalen Transportlage angepasst ist.

4. Warndreieck für Kraftfahrzeuge nach Anspruch 1, 2 oder 3,
**dadurch gekennzeichnet, dass**
an einem oberen vertikalen Teil der Basisleiste (2) eine reflektierende Fläche (3) angebracht ist.

5. Warndreieck nach einem der vorstehenden Ansprüche, **dadurch gekennzeichnet, dass** an Drehbolzen, die die linke und rechte Leiste verbinden, zur Ausbildung von reflektierenden Flächen eine unterer Teil eines dreieckigen Lakens (6) befestigt ist, dessen untere Kante parallel mit der Längsachse der Basisleiste (2) ist und an einem flachen Teil der Basisleiste (2) von oben dicht anliegt.

6. Warndreieck nach einem der vorstehenden Ansprüche, **dadurch gekennzeichnet, dass** die Basisleiste (2)in ihrem unteren Teil weiterhin mit einem mittigen Anschlag (21) zur Sicherstellung einer Transportlage der Standfüße (7) versehen ist, wobei zur Sicherstellung dieser Transportlage der Durchmesser der Standfüße (7) der Breite des inneren Teils des Profils in Form der Buchstabe "U" entspricht, insbesondere der Breite des offenen Eingangsteils der geformten Buchse (22), in den das untere Endstück der gegenüberliegenden Standfüße (7) in der Transportlage eingelegt wird.

7. Warndreieck nach einem der vorstehenden Ansprüche,
**dadurch gekennzeichnet, dass** untere Endstücke der Standfüße (7) zur Verbesserung der Stabilität der Verankerung des Warndreiecks auf der Fahrbahn mit einer Schräge versehen sind.

## Claims

1. A warning triangle for motor vehicles, comprising three arms, including a horizontal base bar (2) and right and left bars which are provided with reflective surfaces (3, 4 and 5), and four support legs (7);
wherein the horizontally disposed base bar (2) has a shape of an inverted letter "T" over its entire length and is equipped, at its two end portions, with moulded receptacles (22) for accommodating pivotable ball joints (71) which are configured to engage upper end portions of the support legs (7);
wherein the moulded receptacles (22) are formed as horizontally disposed "U" profiles which have their internal shape configured for rotatably arranging therein the pivotable ball joints (71) of the wire support legs (7), when their horizontal longitudinal axis is parallel to the horizontal longitudinal axis of the base bar (2);
wherein a first, upper arm of the "U" profile defines a termination of the base bar (2), and a second, lower arm of the "U" profile is located below a horizontal surface of the base bar (2) in the form of the inverted letter "T" and such that it opens in an inward direction;
and wherein the moulded receptacles (22) are provided in the form of two-part receptacles separated by an intermediate wall and closed by a plug (23), in the form of a horizontally disposed prism, and have an inside dimension corresponding to the diameter of the pivotable ball joint (71) of a support leg (7) to allow for rotational movement of the rotatable ball joint (71).

2. The warning triangle according to claim 1, **characterised in that**
the support legs are implemented in the form of wire support legs with a circular cross section.

3. The warning triangle according to claim 1 or 2, **characterised in that**
the internal shape of each of the moulded receptacles (22) is adapted to accommodate pivotable ball joints (71) of the support legs (7) and to engage the support legs (7); and **in that** this internal shape with an open inlet area is at the same time adapted to accommodate the lower end portions of the opposite support legs (7) in a horizontal transport position.

4. The warning triangle for motor vehicles according to claim 1, 2 or 3, **characterised in that** a reflective surface (3) is attached to an upper vertical portion of the base bar (2).

5. The warning triangle according to any one of the preceding claims, **characterised in that** a lower portion of a triangular sheet (6) is fixed to pivot pins connecting the left and right bars, for forming reflective surfaces, the lower edge of the triangular sheet being in parallel to the longitudinal axis of the base bar (2) and tightly fitted to a flat portion of the base bar (2) from above.

6. The warning triangle according to any one of the preceding claims, **characterised in that** the base bar (2) furthermore has a central stop (21) in its lower portion to ensure a transport position of the support legs (7), wherein, for ensuring this transport position, the diameter of the support legs (7) corresponds to the width of the inner portion of the profile in the form of the letter "U", in particular to the width of the open inlet area of the moulded receptacle (22) in which the lower end portion of the opposite support legs (7) is inserted in the transport position.

7. The warning triangle according to any one of the preceding claims, **characterised in that** lower end portions of the support legs (7) are provided with a bevel to improve the anchoring stability of the warning triangle on the roadway.

## Revendications

1. Triangle de signalisation pour véhicules automobiles comprenant trois branches qui comprennent une barre horizontale (2) servant de fondement et une barre droite et une barre gauche, qui sont dotées des surfaces réfléchissantes (3, 4 et 5), et quatre pieds d'appui (7),
dans lequel la barre (2) positionnée à l'horizontale servant de fondement présente sur l'intégralité de sa longueur la forme d'une lettre « T » retournée,
et en ce qu'au niveau de ses deux pièces d'extrémité elle est dotée de douilles formées (22) pour loger des articulations à rotule (71) rotatives, lesquelles sont conçues pour encliqueter des pièces d'extrémité supérieures des pieds d'appui (7),
dans lequel les douilles formées (22) sont conçues en tant que profils en « U » montés horizontalement qui, avec leur forme intérieure, sont conçus pour un agencement rotatif des articulations à rotule (71) des pieds d'appui (7) lorsque leur axe longitudinal horizontal est parallèle à l'axe longitudinal horizontal de la barre de base (2),
dans lequel une première branche supérieure du profil en « U » forme une terminaison de la barre de base (2), et une seconde branche inférieure du profil en « U » se situe sous une surface horizontale de la barre de base (2) sous la forme de la lettre « T » retournée de telle sorte qu'elle soit ouverte dans une direction vers l'intérieur,
et dans lequel les douilles formées (22) sont constituées en tant que douilles sous la forme d'un prisme placé horizontalement, en deux parties séparées entre elles par une paroi intermédiaire, fermées par un tampon (23), dans lequel la dimension intérieure desdites douilles correspond au diamètre de l'articulation à rotule (71) rotative d'un pied d'appui (7) pour permettre le mouvement de rotation de l'articulation à rotule (71) rotative.

2. Triangle selon la revendication 1, **caractérisé en ce que** les pieds d'appui sont conçus en tant que pieds d'appui en fil métallique avec une section transversale circulaire.

3. Triangle selon la revendication 1 ou 2, **caractérisé en ce que** la forme intérieure de chacune des douilles formées (22) est adaptée pour loger des articulations à rotule (71) rotatives des pieds d'appui (7) et pour encliqueter les pieds d'appui (7), et **en ce que**, dans une zone d'entrée ouverte, cette mise en forme intérieure est simultanément adaptée pour loger les pièces d'extrémité inférieures des pieds d'appui (7) en vis-à-vis dans une position de transport horizontale.

4. Triangle de signalisation pour véhicules automobiles selon la revendication 1, 2 ou 3, **caractérisé en ce qu'**une surface réfléchissante (3) est placée au niveau d'une partie supérieure verticale de la barre de base (2).

5. Triangle de signalisation selon l'une des revendications précédentes, **caractérisé en ce qu'**une partie inférieure d'un drap triangulaire (6) dont la bordure inférieure est parallèle à l'axe longitudinal de la barre de base (2) et s'ajuste hermétiquement depuis le dessus contre une partie plate de la barre de base (2), est fixée au niveau de chevilles rotatives qui relient la barre gauche et droite pour concevoir des surfaces réfléchissantes.

6. Triangle de signalisation selon l'une des revendications précédentes, **caractérisé en ce que**, dans sa partie inférieure, la barre de base (2) est en outre dotée d'une butée centrale (21) pour assurer une position de transport des pieds d'appui (7), où, pour assurer cette position de transport, le diamètre des pieds d'appui (7) correspond à la largeur de la partie intérieure du profil en forme de lettre « U », en particulier à la largeur de la partie d'entrée ouverte de la douille formée (22), dans laquelle partie la pièce d'extrémité inférieure des pieds d'appui (7) en vis-à-vis est engagée dans la position de transport.

7. Triangle de signalisation selon l'une des revendications précédentes, **caractérisé en ce que** des pièces d'extrémité des pieds d'appui (7) sont dotées d'un chanfrein pour améliorer la stabilité de l'ancrage du triangle de signalisation sur la chaussée.
